# EUROPEAN PATENT APPLICATION

(11) **EP 3 503 340 A1**
(43) Date of publication of application: **26.06.2019**
(21) Application number: 17209532.5
(22) Date of filing: 21.12.2017
(51) Int. Cl.: H02J 7/00, G07F 7/08

(54) **COVER FOR A PAYMENT TERMINAL, HOLDER FOR SUCH COVER AND METHOD AND USE OF SAID COVER AND OF SAID HOLDER**

(71) Applicant: Ergonomic Solutions International Limited, Epsom Surrey KT19 9QQ (GB)
(72) Inventor: BURMESTER, Benny, 9400 Nørresundby (DK)
(74) Representative: Tellefsen, Jens J.

(57) **Abstract**

The invention relates to at least a first cover and second cover for a first payment terminal and a second payment terminal. Size and shape of first and second covers and of the first and second payment terminals are different. The invention also relates to one holder for such covers. Furthermore the invention relates to method and use of said covers and of said holder. The first cover and the second cover have grooves extending along parallel linear lines at opposite sides of the covers. The one holder has tongues extending along parallel linear lines at opposite sides of the holder. A distance between all parallel linear lines of the covers and of the one holder is the same, so that both the first cover and the second cover may be placed in the one and same holder.

## Description

### Field of the Invention

The invention relates to a cover for a payment terminal. The invention also relates to a holder for a cover and to a method for joining a cover for payment terminal with a holder for the cover. Finally, the invention relates to a use of the cover for holding a payment terminal and for placing the payment terminal in a holder for the cover.

### Background of the Invention

Covers for a payment terminal are known for carrying the payment terminal in a belt of a user or in handheld holder of a user, carrying being provided by specially designed gripping means. Covers are also known for supporting the payment terminal at a wall, to another device or to a holder with specially designed support means. Each cover for a payment terminal is individual to the size and shape of the payment terminal, and each gripping means and support means are individually designed. Therefore, a holder is needed for each payment terminal and for each gripping or support means.

### Object of the Invention

An object of the invention may be to limit the need for different covers. Another object of the invention may be to carry or support a payment terminal together with various and different other mobile devices. Still another object of the invention may be to enable use of a mobile payment terminal together with other mobile devices.

### Description of the Invention

One or more of the objects of the invention may be obtained by one cover for a selected one payment terminal, said one cover having a cavity for holding the one payment terminal and the cavity of said one cover having a shape and size congruent with an outer surface of the selected one payment terminal, and
- another cover for a selected other payment terminal, said other cover having a cavity for holding the other payment terminal and the cavity of said other cover having a shape and size congruent with an outer surface of the selected other payment terminal,
- a size and shape of the cavity of the one cover being different than a size and a shape of the cavity of the other cover, and
- a size and shape of the outer surface of the selected one payment terminal being different than a size and shape of the outer surface of the selected other payment terminal,
- both said one cover and said other cover having first part of a joining structure, said first part of the joining structure of both the one cover and the other cover intended for and capable of interacting with corresponding second part of the joining structure, - said first part of the joining structure of the one cover being identical to said first part of a joining structure of the other cover, and vice versa,
- said second part of the joining structure constituting part of a holder intended for and capable of holding, individually and separately, both the one cover and the other cover by interaction between the first part and the second part of the joining structure.

A cover having a first part of a joining structure and a holder having another part of the joining structure enables the cover to be placed in, and to be fixed to, any holder having the second part of the joining structure. The size and shape of the holder is non-dependent on the size and shape of the payment terminal to be placed in the holder. The capability of the holder of holding the payment terminal is only dependent on the cover for the payment terminal having first parts of the joining structure capable of interacting with the second parts of the of the joining structure of the holder. Thus, a first cover having the first parts of the joining structure and a second cover having the first parts of the joining structure may separately and individually be placed in, and fixed to, the one and same holder having the second parts of the joining structure.

According to a preferred embodiment of the invention, the features are
- said first part of the joining structure of the one cover extending along parallel linear lines at opposite sides of the one cover, and
- said first part of the joining structure of the other cover extending along parallel linear lines at opposite sides of the other cover,
- said second part of the joining structure of the holder intended for and capable of holding the one cover and the other cover extending along parallel linear lines at opposite sides of the holder,
- a distance between the parallel linear lines at opposite sides of said one cover being identical to a distance between said parallel linear lines at opposite sides of a second cover, and
- said distance between the parallel linear lines at opposite sides of said one cover and the other corresponding a distance between said parallel linear lines at opposite sides of the holder.

According to another embodiment of the invention the first part of the joining structure is one of the following structures: grooves extending along parallel linear lines at opposite sides of both the one cover and the other, or tongues extending along parallel linear lines at opposite sides of both the one cover and the other cover.

A joining structure consisting of grooves and tongues provides an easy and reliable way of joining the cover with the holder. Also, the cover may be joined with the holder by only sliding the cover in relation to the holder, along a linear displacement.

According to another embodiment of the invention, the features are
- said one cover and said other cover having a bottom and a top, said bottom and top of the one cover and the other cover being positioned where a bottom part and a top part, respectively, of a payment terminal is positioned, when the payment terminal is placed in the one cover or in the other cover, and
- said one cover and said other cover having a first part of a male/female locking structure, and where a corresponding second part of the male/female locking structure constitute part of the holder, which the first cover and the other cover are intended for and capable of being placed in, and
- said first part of the male/female locking structure of both the one cover and the other cover having the same size and shape, and
- and where a key of the locking structure is provided, said key passing through the holder and said key engaging with either the one cover or the other cover, when either the one cover or the other cover is placed in the holder, and
- said key capable of locking the male/female locking structure of either the one cover or the other cover to the female/male locking structure of the holder, when either the first cover or the other cover is placed in the holder.

A key locking structure ensures that once a first cover or a second cover having first parts of a locking structure is placed in a holder having second parts of the locking structure, the cover may also be locked to the holder by means of the key of the locking structure. Thus, the first cover or the second cover and thereby the payment terminal, cannot be removed from the holder without unlocking the locking structure.

According to another embodiment of the invention, the features are
- both said one cover and said other cover having an aperture with an inner contour, said inner contour of both the one cover and the other cover intended for and capable of aligning with a corresponding outer contour of an interface of a holder, when the one cover or the other cover is placed in the holder,
- said aperture and inner contour of the one cover being identical to said aperture and inner contour of the other cover, and vice versa, so that, when the cover is placed in the holder, the inner perimeter of the aperture of the one cover or the other cover aligns with the outer perimeter of the interface of the holder,
- said outer contour of an interface constituting part of a holder intended for and capable of holding, individually and separately, both the one cover and the other cover by interaction between the first part and the second part of the joining structure.

Alignment between an inner contour of aperture of the one cover and the other cover and an outer contour of an electrical interface of a holder ensures a reliable support of the cover in the one and same holder, both for the one cover and the other cover.

According to another embodiment of the invention, said holder has second part of a joining structure, and said holder intended for and capable of holding, individually and separately, both the one cover and the other cover by interaction between a first part of the joining structure constituting part of the one cover and the other cover and the second part of the joining structure. The one and same holder is thereby capable of holding both the one cover and the other cover, nondependent on the size and shape of the one cover and the other cover, as long as the joining structures are identical.

According to another embodiment of the invention, the features are
- said second part of the joining structure of the holder extending along parallel linear lines at opposite sides of the holder, and
- a distance between the parallel linear lines of the second part of the joining structure at opposite sides of the holder corresponding to a distance between the parallel linear lines at opposite sides of said one cover and the other cover.

According to another embodiment of the invention, the second part of the joining structure is one of the following structures: grooves extending along parallel linear lines at opposite sides of the holder, said groves intended for and capable of interacting with corresponding tongues extending along opposite sides of a first cover and another cover, or tongues extending along parallel linear lines at opposite sides of holder, said tongues intended for and capable of interacting with corresponding grooves extending along opposite sides of a first cover and the other cover.

According to another embodiment of the invention, said holder is a support unit for supporting, individually and separately, the one cover or the other cover for a selected one payment terminal or a selected other payment terminal, and according to any of claims 1-5, and said support unit also capable of supporting at least one mobile device not being a payment terminal such as a smart device, e.g., a mobile phone,
- the support unit comprising at least two support surfaces for supporting the at least two mobile device along the support surfaces of the support unit, and where one of the at least two mobile devices is a payment terminal,
- at least one of the support surfaces comprising retaining elements of a type, a shape and a size congruent with a type, a shape and a size of the at least one mobile device, said retaining elements capable of retaining at least one mobile device to the at least one support surface, and
- the support unit having at least a first electric interface and a second electric interface for a corresponding first electric interface and second electric interface, respectively, of different first and second mobile devices, and
- the support unit having at least one electric socket of a type, a shape and a size congruent with a type, a shape and a size of a plug of a charging device being external to the support unit and capable of being electrically connected to the support unit, and
- and the support unit having a first wired connection between the at least one electric socket and the first electric interface and having a second wired connection between the at least one electric socket and the second electric interface.

According to another embodiment of the invention, the holder is a support unit for supporting a tablet, said support unit having an electrical interface for the a mobile device being a payment terminal, said electrical interface configured as a contact surface provided with a plurality of electrical pads extending substantially along the contact surface, the electrical pads of the contact surface being provided at locations along the plane contact surface corresponding to correlating contact pads of the payment terminal, and where the contact surface is detachable and is replaceable by another contact surface, whereby various payment terminals may be supported by the support unit and may be connected with the electrical pads of the contact surface.

According to another embodiment of the invention, the features are
- said holder having an interface with an outer contour intended for and capable of aligning with a corresponding inner contour of an aperture of the one cover and the other cover, when the one cover or the other cover is placed in the holder, so that, when the cover is placed in the holder, the inner perimeter of the aperture of the one cover or the other cover aligns with the outer perimeter of the interface of the holder,
- said holder with the outer contour of the interface intended for and capable of holding, individually and separately, both the one cover and the other cover by interaction between the first part and the second part of the joining structure.

One or more objects of the invention may also be obtained by a method for initially supporting a selected one payment terminal in one holder according to any of the mentioned features of a holder and subsequently supporting a selected other payment terminal in the one and same holder according to any of the mentioned features of a holder,
said method comprising the initial non-prioritised two steps of:
- placing the selected one payment terminal in one cover according to any of the mentioned features of a cover, and placing the one cover in one holder, and
said method furthermore comprising the subsequent step of releasing the one cover from the one holder, and
said method comprising the further subsequent non-prioritised two steps of:
- placing the selected other payment terminal in another cover according to any of the mentioned features of a cover, and placing the other cover in the one holder.

One or more objects of the invention may also be obtained by a method for initially supporting a selected one payment terminal in one holder and subsequently supporting the same selected one payment terminal in another holder,
said method comprising the initial non-prioritised steps of:
- placing the selected one payment terminal in one cover according to any of the mentioned features of a cover, and placing the one cover according to any of the mentioned features of a cover in one holder according to any of the mentioned features of a holder, and
- said one holder having tongues extending along parallel linear lines at opposite sides of the one holder, said tongues intended for interacting with corresponding grooves extending along opposite sides of the one cover,
the method furthermore comprising the subsequent step of
- releasing the one cover from the one holder, and placing the one cover in the other holder, said other holder being different to the one holder, and
- said other holder having tongues extending along parallel linear lines at opposite sides of the other holder, said tongues intended for interacting with corresponding grooves extending along opposite sides of the one cover, and
- a distance between the parallel linear lines at opposite sides of both said one holder and said other holder corresponding to a distance between the grooves extending along parallel linear lines at opposite sides of the one cover.

One or more objects of the invention may also be obtained by use of either one of said one cover and said other cover according to any of the mentioned features of a cover for supporting either a selected one payment terminal or a selected other payment terminal, respectively, and either said one cover or said other cover initially used in a holder according to any of the mentioned features of a holder, and the other one of said one cover and other cover subsequently used in the one and same holder according to any of the mentioned features of a holder.

### Description of the Drawing

Fig. 1A-1D are figures showing a cover according to the invention, the cover holding a payment terminal,
Fig. 2A-2D are figures showing a support unit for the cover according to the invention,
Fig. 3A-3D are figures showing a charging dock for holding a support unit for the cover according to the invention,
Fig. 4A and 4B are figures showing a support unit supporting a first cover according to the and supporting a mobile phone and placed in a charging dock,
Fig. 5A and 5B are figures showing a support unit supporting a second cover according to the and supporting a mobile phone and placed in a charging dock,
Fig. 6A-6D are figures showing an electronic circuit and a first wired connection with plugs and a second wired connection with plugs, all for a support unit,
Fig. 7A-7J are figures showing various holders for a cover according to the invention, all holders capable of holding the at least two different covers,
Fig. 8A-8B are figures showing a holder for a tablet, the tablet holder also capable of holding at least two different covers.

### Detailed Description of the Invention

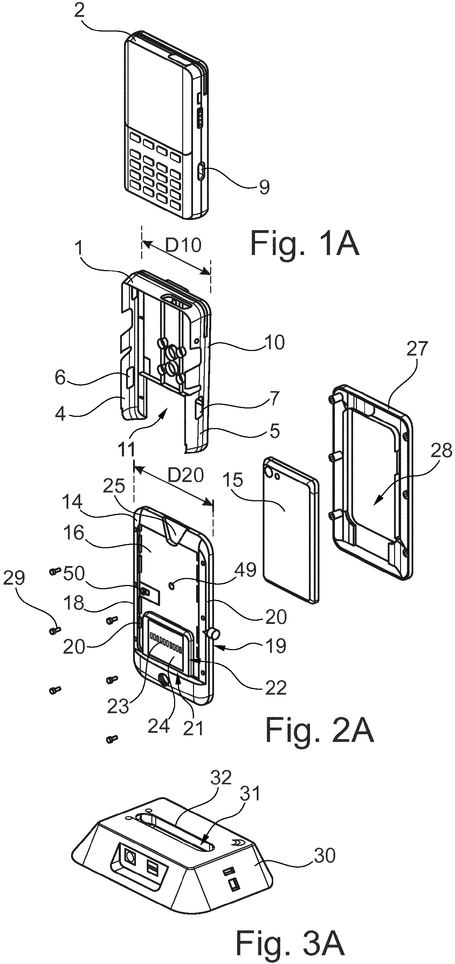

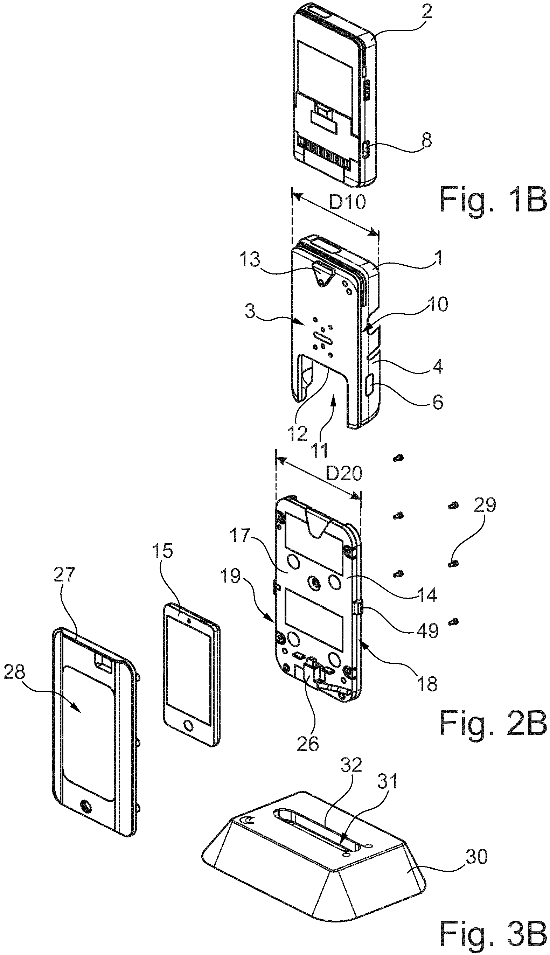

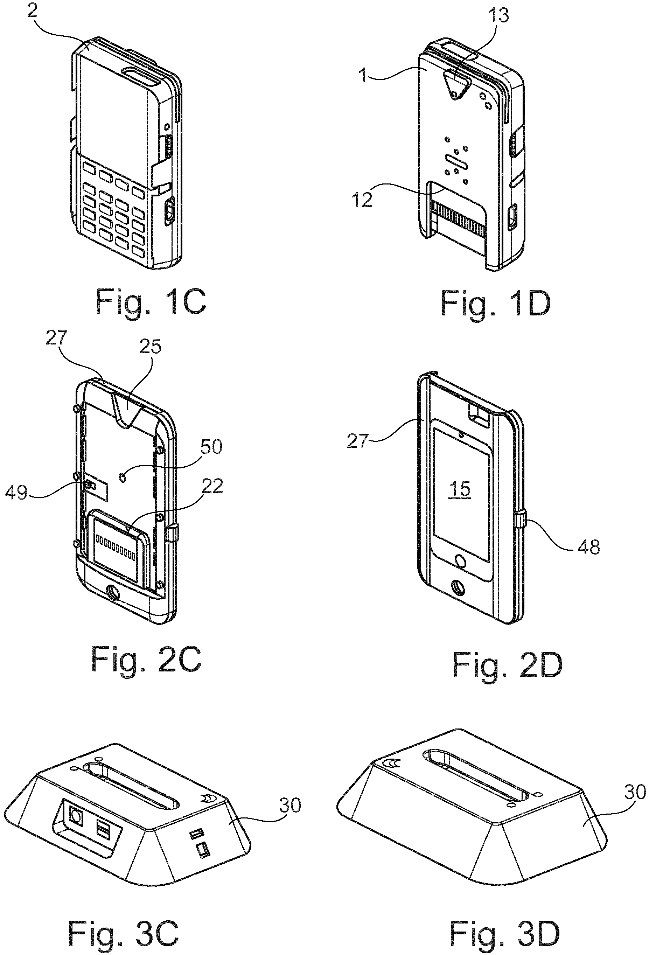

Fig. 1A and Fig. 1B show a cover 1 holding a payment terminal 2. The cover 1 has a rear surface 3 and has opposite side walls 4,5. The side walls 5,5 define a cavity having a size and a shape congruent with an outer size and shape of the payment terminal 2 and the opposite side walls 4,5 hold the payment terminal 2 firmly to the cover 1. The opposite side walls 4,5 also have apertures 6,7 allowing access and control of buttons 8 and possible plugs 9, respectively, for external equipment to be attached to the payment terminal 2, when the payment terminal 2 is placed in the cover 1 The apertures 6,7 of the cover 1 is positioned in the opposite side walls 4,5 corresponding to buttons 8 and plugs 9 of the payment terminal 2, which the cover 1 is holding.

Along the opposite sidewalls 4,5 of the cover 1, the cover 1 is provided with grooves 10 extending along linear lines. The grooves 10 extend along parallel lines at the opposite side walls 4,5 of the cover 1. The grooves 10 are intended for interacting with corresponding tongues of a support unit (see Fig. 2A). At a bottom of the cover 1, as viewed, the cover 1 is provided with an aperture 11. The aperture has an inner perimeter 12. The bottom of the cover 1 is where a bottom of the payment terminal 2 is positioned, when the payment terminal 2 is placed in the cover 1. The aperture 11 allows access between an electric, and possibly electronic, interface of a support unit (see Fig. 2A) and charging, and possibly data transfer, terminals of the payment terminal 2, when the payment terminal 2 is placed in the cover 1 and when the cover 1 is placed in a support unit.

A top of the cover 1 is provided with a male part 13, see Fig. 1B, of a locking structure. A congruent female part of the locking structure is provided at a top of the support unit (see Fig. 2A). The male part 13 has the shape of a triangle with a point of the triangle pointing downwards towards the bottom of the cover 1. Accordingly, the male part of the locking structure is tapered towards the bottom of the cover 1.

Alternative shapes of the male part of the locking structure may be selected. The male part of the locking structure may have a shape of part of a circle or oval with a widest part of the circle or oval extending along a top edge of the cover, or the male part of the locking structure may have a shape of a rectangle or other polygonal shape.

Fig. 2A and Fig. 2B show a support unit 14 capable of supporting, at the same time, a cover (see Fig. 1A and Fig. 1B) and a mobile device 15. In the embodiment shown, the mobile device 15 is a mobile phone. In part of the following, a mobile phone, also called a cellular phone, preferably a smart phone, is used as an example of the mobile device 15. Another example of a mobile device 15 may be any other smart device, preferably with a touch screen, such as an iPod®. The support unit 14 has one support surface 16 and another support surface 17. The one support surface 16 is capable of supporting the cover 1 and the other support surface 17 is capable of supporting the mobile phone 15. The support unit 14 is capable of, selectively, supporting both the cover 1 and the mobile phone 15, or supporting only the cover 1 or supporting only the mobile phone 15. The support unit has a top and a bottom and has opposite sides 18,19. The bottom is intended for being placed in a charging dock (see Fig. 3A and Fig. 3B) for charging a payment terminal 2 placed in the cover 1 and/or for charging a mobile phone 15 placed in the support unit 14.

Along the opposite sides 18,19 of the support unit 14, the support unit 14 is provided with tongues 20 extending along parallel linear lines. The tongues 20 are intended for interacting with corresponding grooves 10 of the cover 1 (see Fig. 1B). At the bottom of the support unit 14, the support unit 14 is provided with an interface 21. The interface 21 has an outer perimeter 22. The interface 21 is positioned where the bottom of the payment terminal 2 is positioned, when the payment terminal 2 is placed in the cover 1 and the cover 1 is placed in the support unit 14. The interface 21 has charging, and possibly data transfer, pads 23 intended for being connected with corresponding charging, and possibly data transfer, pads of the payment terminal 2, when the payment terminal 2 is placed in the cover 1, and when the cover 1 is placed in the support unit 14.

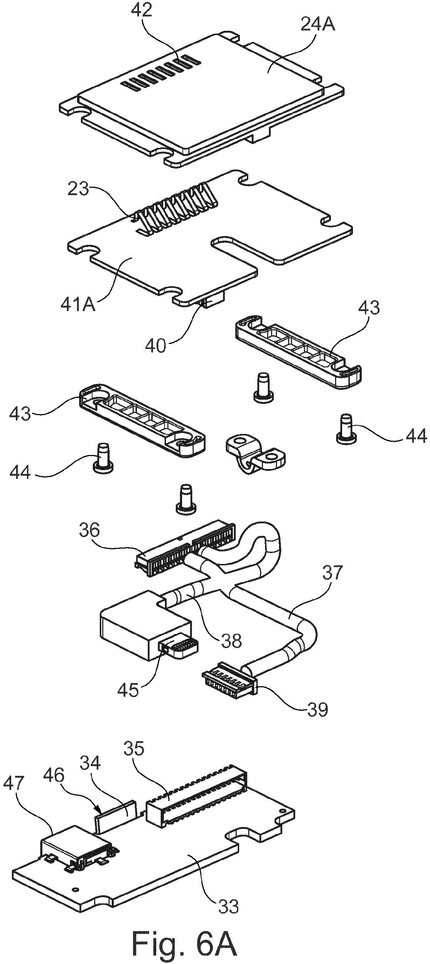

The interface 21 has a centre plate 24 within the outer perimeter 22. The outer perimeter 22 has an outer size and shape congruent with the inner perimeter 12 of the aperture 11 (see Fig. 1B) of the cover 1. The terminal 23 of the centre plate 24 within the outer perimeter 22 is connected to a PCB or other electronic circuit (see Fig 6A-6D).

A top of the support unit 14 is provided with a female part 25 congruent to a size and shape of the male part 13 (see Fig. 1B) of the locking structure provided at the top of the cover (see Fig. 1B). The female part 25 has the shape of a triangle with a point of the triangle pointing towards a bottom of the support unit 14. Accordingly, the female part 25 is tapered towards the bottom of the support unit.

Alternative shapes of the female part of the locking structure may be selected. The female part of the locking structure may have a shape of a part of a circle or oval with a widest part of the circle or oval extending along a top edge of the support unit or the female part of the locking structure may have a shape of a rectangle or other polygonal shape.

Referring to Fig. 1B and Fig. 2A, interaction between the cover 1 and the support unit 14 is described. Firstly, the payment terminal 2 is placed in the cover 1. Subsequently, the cover 1 is placed in the support unit 14 by the bottom of the cover being positioned at the top of the support unit 14. The grooves 10 along the opposite side walls 4,5 of the cover 1 are positioned in alignment with the tongues 20 along the opposite sides 18,19 of the support unit 14. The tongues 20 of the support unit 14 are sequentially inserted into the grooves 10 of the cover 1 by mutual linear displacement of the cover 1 and the support unit 14, until the bottom of the cover reaches the bottom of the support unit 14. When the cover 1 is in place in the support unit 14, the terminals of the interface of the support unit are in contact with the terminal of the payment terminal. When the cover 1 is in place in the support unit 14, the inner perimeter 12 of the aperture 11 of the cover 1 aligns with the outer perimeter 22 of the interface of the support unit 14.

Also, when the cover 1 is in place in the support unit 14, the male part 13 of the locking structure of the cover 1 aligns with the female part 25 of the locking structure of the support unit 14. Locking may be provided by a key lock (see Fig ...).

Fig. 2B shows the other support surface 17 of the support unit, opposite to the one support surface shown in Fig. 2A. The other support surface 17 is intended for supporting the mobile phone 15. An electrical plug 26 is positioned at the bottom of the support unit. The electrical plug 26 is positioned so that the electrical plug 26 is capable of interacting with a corresponding socket (not shown) of the mobile phone 15, when the mobile phone 15 is placed in the support unit 14. A mobile phone frame 27 is provided for holding the mobile phone 15 in place in the support unit 14.

The mobile phone frame 27 has an aperture 28 for accessing a touch screen of the mobile phone 15, when the mobile phone 15 is placed in the support unit 14 and is held in place by the mobile phone frame 27. In the embodiment shown, the mobile phone frame 27 is fixed to the support unit by screws 29. Other means of fixing the mobile phone frame 27 to the support unit 14 may be used instead of screws, such as a click-on means. However, screws have the advantage that a tool, that is, a screwdriver is needed for releasing the mobile phone frame 27 from the support unit 14. The mobile phone frame 27 may have a size and a shape configured for a size and shape of a selected brand and a selected model of mobile phone. Alternatively, the mobile phone frame may be configured for a plurality of sizes and shapes of various brands and/or various models of mobile phones. Even in the alternative, if the support unit 14 is intended for being used without a mobile phone, the cover may be a cover covering the entire other support surface 17, when not used for supporting a mobile phone.

Fig. 3A and Fig. 3B show a charging dock 30 for charging any device supported by the support unit 14, either for charging both a payment terminal 2 and a mobile phone 15, or for charging only a payment terminal 2, if only a payment terminal is supported by the support unit 14, or for charging only a mobile phone 15, if only a mobile phone is supported by the support unit 14. But, via the support unit, both a payment terminal 2 and a mobile phone 15 are capable of being charged at the same time. The charging dock has a cavity 31 having an aperture with an inner perimeter 32 congruent with an outer perimeter of the bottom of the support unit 14. Accordingly, the support unit 14 is capable of being placed in the charging dock 30 and is capable of standing upright in the charging dock 30 with either one of or both of the payment terminal 2 and the mobile phone 15 supported by the support unit 14 during charging.

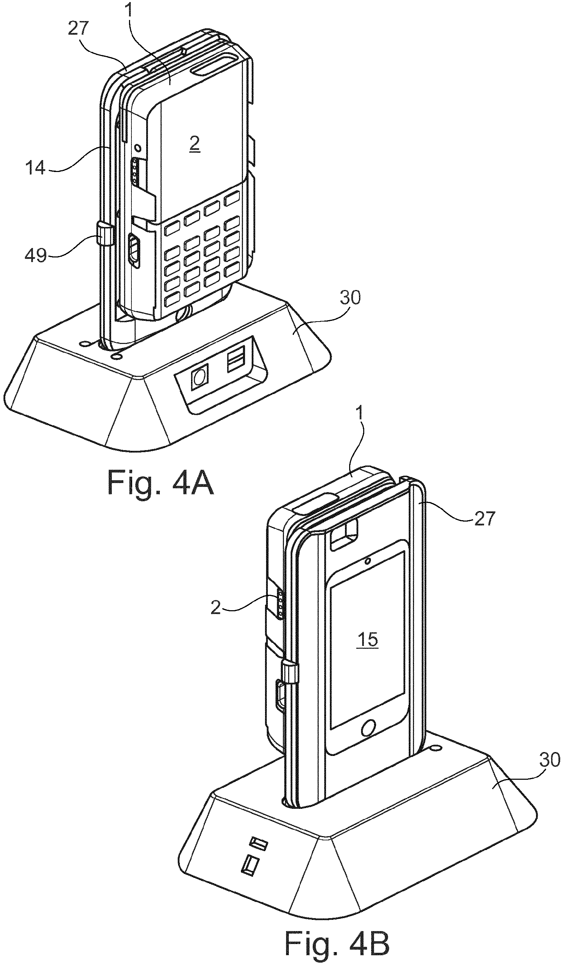

Fig. 4A and Fig. 4B show a support unit with a payment terminal and a mobil phone supported by the support unit. And with the support unit placed in the charging dock. In the embodiment shown, the payment terminal is of the Ingenico® ISMP4 Companion standard.

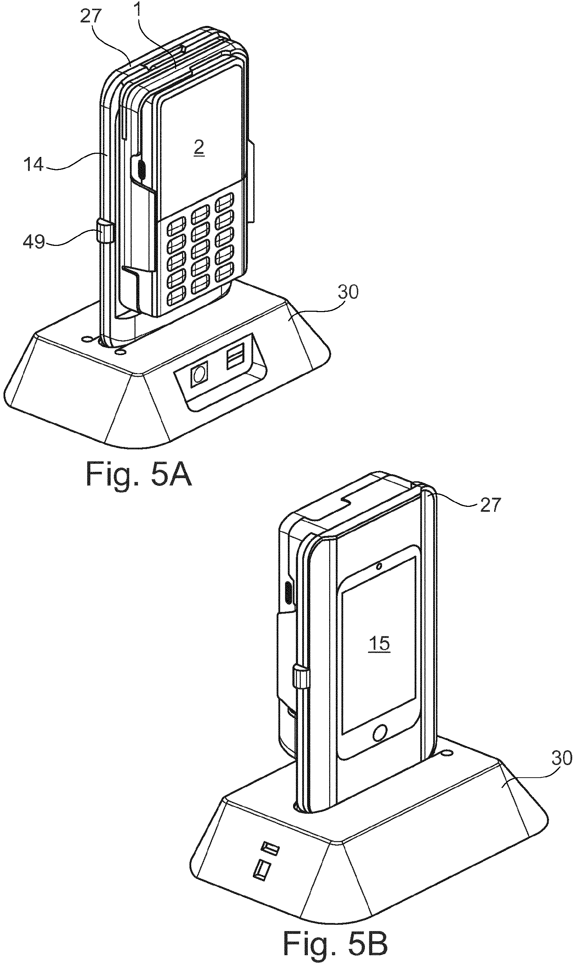

Fig. 5A and Fig. 5B show a support unit with a payment terminal and a mobile phone supported by the support unit. And with the support unit placed in the charging dock. In the embodiment shown, the payment terminal is of the Verifone® E355 standard.

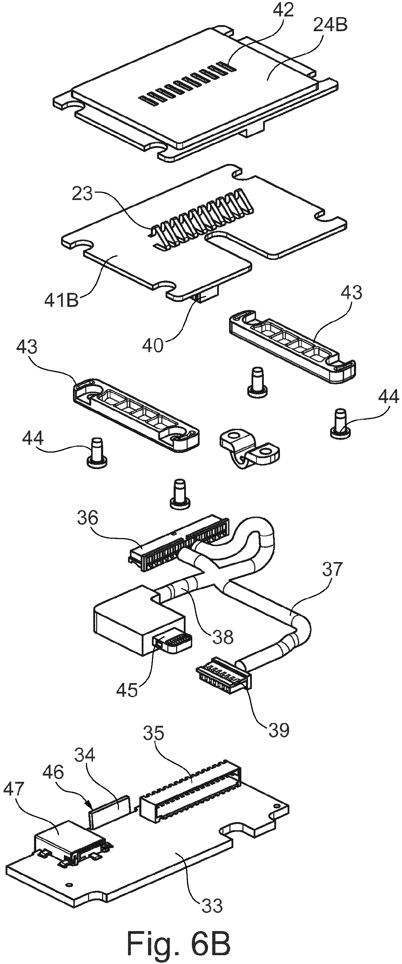

Fig. 6A and Fig. 6B show, in an exploded view, various parts of an electronic unit of the support unit 14. The electronic unit shown in Fig. 6A is for the Ingenico® ISMP4 Companion standard. The electronic unit shown in Fig. 6B is for the Verifone® E355 standard. The electronic unit comprises a base plate 33 with a printed circuit board (PCB) 34 or other electronic circuit. The base plate 33 also has a socket 35 intended for being connected with a plug 36. Extending from the plug 36 is a first wired connection 37 and a second wired connection 38. The base plate with the PCB 34 and the socket 36 together with the plug 36 and the first wired connection 37 and the second wired connection 38 is intended for being embedded within the bottom of the support unit 14.

The first wired connection 37 has a plug 39 for attaching an end of the wired connection 37 to a corresponding socket 40 of a contact pad plate 41 with contact pads 23 (see also Fig. 2A) for interfacing with corresponding contact pads of a payment terminal, thereby connecting the plug 35 and the payment terminal 2, when the payment terminal 2 is placed in the cover 1, and when the cover 1 is placed in the support unit 14.

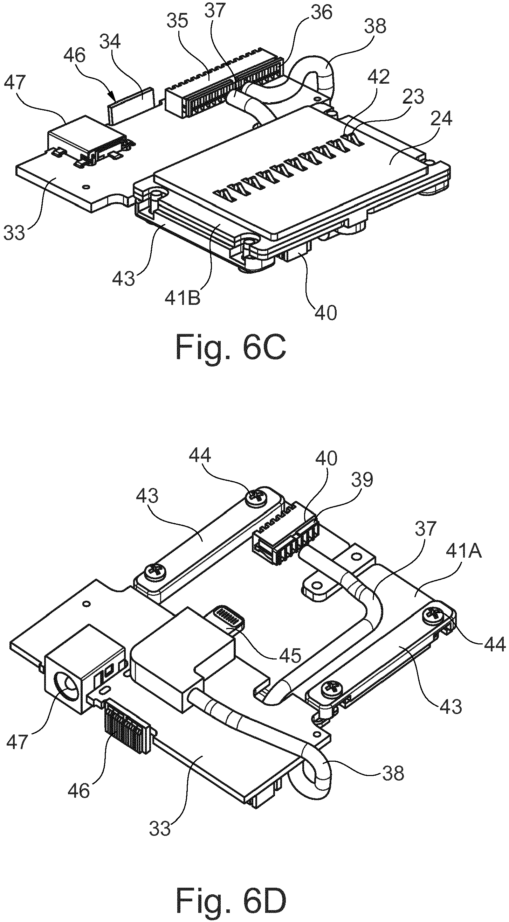

The plug 36 for attaching the first wired connection 37 to the plug 35 is non-dependant on the size and shape and type of contact pad plate 41 and the centre plate 24. When in a non-exploded, assembled state (see Fig. 6C), the contact pads 23 extend through contact pad orifices 42 in the centre plate 24. Assembly of the contact pad plate 41 and the centre plate 24 is provided by braces 43 and screws 44, the screws 44 during assembly being screwed into corresponding threads (not shown in any Figure) of the support unit.

In the figures, two different centre plates 24A and 24B are shown, one contact pad plate 41A and centre plate 24A intended for the Verifone® E355 standard and another contact pad plate 42B and centre plate 24B intended for the Ingenico® ISMP4 Companion standard. Contact pad plates and centre plates of other present standards or interfaces of possible future standards are capable of being connected by using another layout of the interface than the ones shown.

The contact pad plate 41 with contact pads 23 extending through the orifices 42 of the centre plate 24constitutes the interface 21 (see fig. 2A). The centre plate 24, when the electronic circuit constitutes part of the support unit 14, is positioned within the outer perimeter 22 shown in Fig 2A. Accordingly, if the support unit 14 is fitted with one centre plate 24 of one interface 21 or is fitted with another centre plate 24 of another interface 21, or if one centre plate 24 of one interface 21 is replaced with another centre plate 25 of another interface 21, both centre plates fit within the outer perimeter 22 shown in Fig. 2B. The one support surface 16 is independent on the type of interface 21 used, such as either the Ingenico® ISMP4 Companion standard or the Verifone® E355 standard, as long as the centre plate 24 of the interface 21 fits within the outer perimeter 22 shown in Fig 2B.

The second wired connection 38 has a plug 45 for attaching an end of the second wired connection 38 to a socket (not shown) of mobile phone (see fig. 2B), thereby connecting the plug 36 with the mobile phone 15, when the mobile phone 15 is placed in the support unit 14.

The second wired connection 38 between the plug 36 and the mobile phone 15 is selected depending on the type of socket (not shown) of the mobile phone 15. According to today's most used standards of sockets for mobile phones, the plug 45 of the second wired connection 35 is preferably one of the following types of plugs: Lightning, USB-C and Micro USB. In the embodiment shown, the plug 40 is a of the Lightning type. However, the plug 36 for attaching one end of the second wired connection 38 to the socket 35 is the same, non-dependant on the type of plug 45 for attaching the other end of the second wired connection 38 to a socket of mobile phone.

The base plate 33 also has a first charging socket 46 (see also Fig. 6D) at a bottom of the base plate 33. The first charging socket 46 is for providing electric connection between a corresponding charging plug of an electric charging device constituted by an electric charging dock (see Fig. 3A and Fig. 3B), in which the support unit 14 is placed for electric charging of a payment terminal 2 and/or a mobile device 15, when the payment terminal 2 is placed in a cover 1, and when the cover 1 is placed in the support unit 14 and/or when the mobile device 15 is placed in the support unit 14.

The PCB 33 also has a second charging socket 47 (see also Fig. 6D), such as a so-called DC round socket, at the bottom of the base plate 33. The second charging socket 47 is for providing electric connection between a corresponding charging plug of an electric charging device constituted by an external electric charger (not shown in any figure) for electric charging of a payment terminal 2 and/or a mobile device 15, when the payment terminal 2 is placed in a cover 1, and when the cover 1 is placed in the support unit 14 and/or when the mobile device 15 is placed in the support unit 14.

The first charging socket 46 and the second charging socket 47 for electrical charging of a payment terminal and/or a mobile device is non-dependant on the type of interface 21 for a payment terminal and is non-dependant on the type of plug 45 for attaching the end of the second wired connection 38 to a socket of mobile device.

Accordingly, any type of payment terminal capable of being supported by the support unit and/or any type of mobile device capable of being supported by the support unit may be charged via the support unit without any need of exchanging the first charging socket 46 and/or the second charging socket 47.

In an alternative embodiment of the base plate 33, only one charging socket, either only the first charging socket 46 or only the second charging socket 47 is provided. In an even alternative embodiment of a base plate, no charging socket is provided. In that case, a payment terminal and a mobile device must be charged separately and individually.

The support unit 14 constitutes a common basis for both a payment terminal and a mobile device. The support unit constitutes a common basis for charging both a payment terminal and a mobile phone supported by the support unit, and the support unit also constitutes a common basis for the payment terminal and the mobile phone possibly transferring data between each other. And, the first wired connection 37 and/or the second wired connection 38 may be fitted or exchanged dependent on the payment terminal and/or dependant the mobile phone to be placed in the support unit, without having to fit or exchange the support unit as such. Accordingly, the support unit as such including the base plate 33 with the PCB 34, the socket 35 and possibly also the first charging socket 46 and/or the second charging socket 47 is the same, non-dependent on the brand and type of payment terminal to be placed in the support unit and non-dependent on the brand and type of mobile phone to be placed in the support unit.

In the embodiment shown, both the first wired connection 37 between the plug 36 and the interface 21 for the payment terminal and the second wired connection 38 between the plug 36 and the mobile device are wired connections. In alternative embodiments, either both or one of the connections are wireless connections between the plug 36 and the payment terminal and/or the mobile device. If both or one of the connections are wireless connections, plugs 39,45 are not needed for connecting with the payment terminal and/or the mobile device.
However, according to existing technology, if both or the one connection is wireless, only data exchange is possible between the PCB 34 or other electronic circuit and the payment terminal and/or the mobile device. Electric charging is not possible via a wireless connection, and the payment terminal and/or the mobile device must be charged, separately and individually, via other means than via the one charging plug 46 or the second charging plug 47.

In the embodiment shown, the payment terminal 2 is placed in a cover 1, and the cover 1 is provided with grooves 10 intended for interacting with tongues 20 of the support unit 14, thereby holding he payment terminal to the support unit 14. In the alternative, the payment terminal is not placed in a cover and the payment terminal itself has grooves extending along opposite linear lines at opposite sides of the payment terminal itself. In such alternative, grooves of the payment terminal itself are intended for interacting directly with tongues of the support unit, and no holder is needed.

A distance D10 between the opposite parallel linear lines along which the grooves 10 at opposite sides 4,5 of the cover 1 corresponds to a distance D20 between the parallel opposite linear lines along which the tongues 20 of the support unit 14 extend. Thereby, the grooves 10 of the cover 1 interact with the tongues in an accurate and secure manner, supporting and holding the cover 1 to the support unit 14 and supporting and holding a payment terminal 2, when placed in the cover 1, to the support unit 14.

When possibly another payment terminal needs being supported by the support unit, other than a payment terminal initially supported, another cover having a size and a shape congruent with the other payment terminal may be placed in the support unit. A distance D10 between groves 10 extending along parallel opposite linear lines at opposite sides 4,5 of the other cover 1 corresponds to the distance D20 between the parallel opposite linear lines along which the tongues 20 of the support unit 14 extend.

By use of different covers, each having a cavity with a size and a shape congruent with an outer size and shape of a selected payment terminal, but all different covers having a distance D10 between grooves 10 extending along opposite parallel linear lines at opposite sides of the covers corresponding to the distance D20 between the linear lines along which the tongues 20 of the support unit 14 extends, different selected payment terminals may be supported, individually and not at the same time, by the support unit via a selected cover having a size and a shape congruent with a selected payment terminal. Accordingly, the support unit is non-dependent on the payment terminal to be supported, as long as the selected cover for a selected payment terminal has a distance between grooves extending along linear lines corresponding to the distance between the linear lines along which the tongues of the support unit extend.

The support unit has additional features for assisting safe use of the support unit.

The support unit has a finger-release lock 48 provided at one side of the support unit. The finger-release lock has a male part or female part (not shown) of a lock intended for interacting with a congruent female part or male part (not shown) of a cover for a payment terminal or a congruent female part or male part (not shown) of a payment terminal itself. The finger-release lock is spring-biased. If the finger-release lock is not activated by a finger of a user, the male part or female part of the lock is interacting with the congruent female part or male part of a cover for a payment terminal or the congruent female part or male part of a payment terminal itself.

If the finger-release lock is activated by a user by pushing the lock from the side of the support unit, interaction is released between the male part or female part of a lock of the support unit and the congruent female part or male part of the cover for a payment terminal or the congruent female part or male part of a payment terminal itself.

The finger-release lock, when interaction is present, prevents the cover with a payment terminal, or prevents the payment terminal itself, from being displaced in relation to the support unit, by preventing sliding of the grooves along the tongues. Accordingly, even if the support unit with a cover with a payment terminal or with just a payment terminal itself placed in the support unit unintentionally is positioned upside/down, the cover with a payment terminal, or just a payment terminal itself, when placed in the support unit, will not displace from the support unit.

When a cover with a payment terminal, or just a payment terminal itself, intentionally is to be released from the support unit, a user pushed the finger-release lock, and the cover with a payment terminal, or just a payment terminal itself, is allowed being displaced from the support unit by sliding the cover with a payment terminal, or by sliding a payment terminal itself, upwards in relation to the support unit.

The support unit also has a hole 49 in a centre of the one support surface 16. The hole 49 is intended for allowing a screw (not shown) passing through a hole in the cover and interacting with a congruent thread in the hole 49, when the cover or the payment terminal is placed in the support unit. Accordingly, alternative to, or additional to, the finger-release lock 48, the cover with a payment terminal placed in the cover, is not only locked, but is fixed to the support unit by fixing means such as a screw, thus needing a tool such as a screwdriver for releasing the cover with the payment terminal placed therein. A risk of the cover with a payment terminal placed therein being stolen is thereby eliminated or at least reduced. Also, a risk of the cover with a payment terminal placed therein accidently being released is also eliminated or at least reduced.

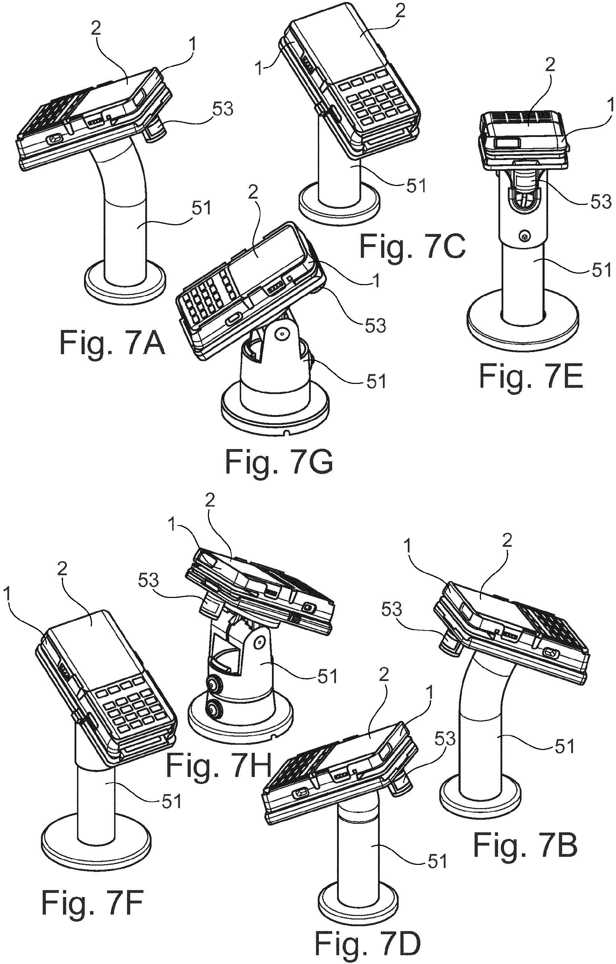

Fig 7A-Fig. 7H show various holders 50 for holding a cover 1 according to the invention. The various holders are mounted to various table stands 51. The various holders for the cover are different in relation to the type of, the size of and the function of the holders. The various holders are intended for holding at least one, but preferably intended for, individually and separately, holding at least two different payment terminals, either different terminals in relation to size and shape and/or different terminal in relation to position of electrical pads for interface with equipment external to the payment terminal. By use of a cover according to the invention, and by providing each of the various holders with one part of a joining structure such as tongues capable of interacting with another part of the joining structure such as grooves of the cover, the various holders are non-dependent on the payment terminal being placed in the holder as long as a distance between, as example, tongues provided along opposite linear lines of the holder have a mutual distance similar to a distance between, as example, grooves along parallel opposite linear lines, along side edges of the cover.

In Fig. 7A-Fig. 7H, the joining structure is a groove and tongue joining structure, with the grove provided along opposite sides of the cover and with the tongues provided along opposite side edges of the support unit. In the alternative, the payment terminal itself is provided with grooves along opposite sides of the payment terminal. In such embodiment, no cover is needed for holding the payment terminal to the holder. Grooves of the payment terminal itself constitute the grooves, which tongues of the holder is interacting with for holding the payment terminal to the holder.

Other types of joining structures may be used for holding the cover or the payment terminal itself to the support unit. As example, the joining structure may be one part of a magnetic joining structure being a part of the support unit and another part of a magnetic joining structure being part of the cover or the payment terminal itself. Thus, either the support unit or the cover or the payment terminal itself may be provided with a magnet with a selected polarity, and either the cover or the payment terminal itself or the support unit, respectively, may be provided with a piece of magnetic metal or with a magnet with a polarity opposite to the selected polarity, and which piece of metal, or which magnet with opposite polarity, the magnet with a selected polarity of the support unit or the cover or the payment terminal itself may interact with, thereby holding the cover or the payment terminal itself to the support unit.

Another example, the joining structure may be one part of a click-on joining structure being part of the support unit, and another part of a click-on joining structure being part of the cover or of the payment terminal itself. Thus, either the support unit or the cover or the payment terminal itself may be provided with a male part of a click-on joining structure, and either the cover or the payment terminal itself or the support unit, may be provided with a female part of a click-on joining structure, so that the male part of the click-on joining structure may interact with the female part of the click-on joining structure, thereby holding the cover or the payment terminal itself to the support unit.

Yet another example, the joining structure may be one part of a Velcro® tape being attached to the support unit, and another part of a Velcro® tape being attached to the cover or the payment terminal itself. Thus, either the support unit or the cover or the payment terminal itself may be provided with a male part of a Velcro® tape, and either the cover or the payment terminal itself or the support unit, may be provided with a female part of a Velcro® tape, so that the male part of the Velcro® tape may interact with the female part of the Velcro® tape, thereby holding the cover or the payment terminal itself to the support unit.

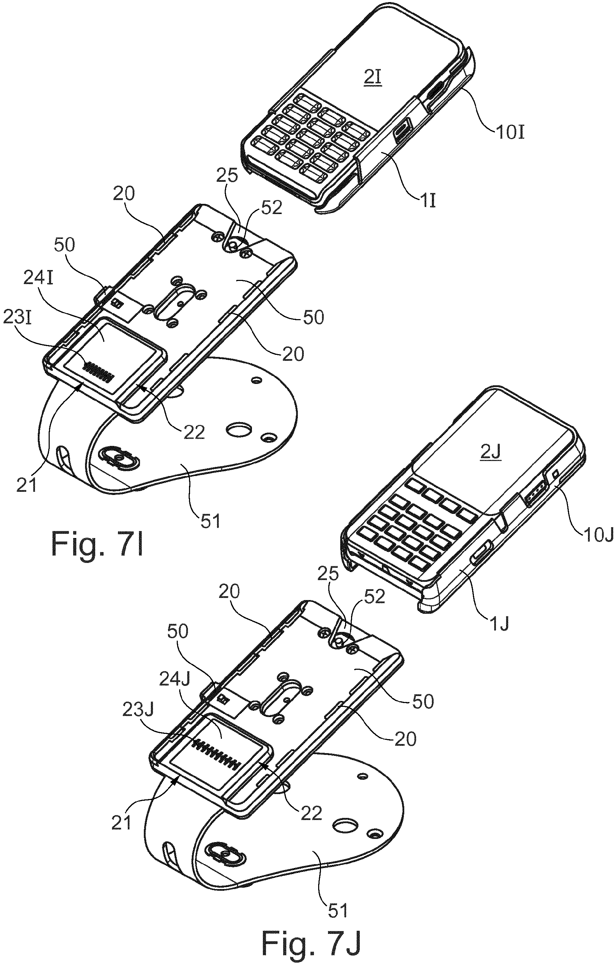

Fig. 7I and Fig. 7J show a holder for holding 40 for covers 1 or for holding a payment terminal itself, without the use of a cover. The holder 40 is supported by a table stand 41. Fig. 7I shows the holder 50 supported by the table stand and with one type of interface 21 provided. The interface 21 provided in the holder shown in Fig. 7I is for the Verifone® E355 standard. Fig. 7J shows basically the same holder as in Fig 7I supported by the same table stand as in Fig. 7I, however, with another type of interface 21 provided. The interface 21 provided in the holder shown in Fig. 7J is the Ingenico® ISMP4 Companion standard.

Fig. 7I also shows a first cover 1I in which a first payment terminal 2 from the company Verifone® is placed. The first cover with the first payment terminal is ready to be displaced linearly into the holder 50, so that grooves 10J on opposite side of the first cover 1I interact with tongues 20 one opposite sides of the holder 50. A rear side of the first payment terminal is provided with contact pads (see Fig. 1B) at specific positions of the rear side of the payment terminal. The interface 211 of the holder is provided with contact pads 231 at specific positions of the centre plate 24 of the interface 21. The specific positions, at which the contact pads 231 of the centre plate 24 of the interface 211 is positioned, correspond to the where the contact pads at the rear side of the first payment terminal 2 is positioned, when the first cover 1I with the first payment terminal 2 placed therein, is in place in the holder 50, after the first cover 1I has been fully displaced into the holder 50.

Fig. 7J also shows a second cover 1J in which a second payment terminal 2J from the company Ingenico® is placed. The second cover 1J with the second payment terminal 2J is ready to be displaced linearly into the holder 50, so that grooves 10J on opposite sides of the second cover 1J interact with tongues 20 of the holder 50. A rear side of the second payment terminal 2J is provided with contact pads (see Fig. 1B) at specific positions of the rear side of the payment terminal. The interface 21J of the holder 50 is provided with contact pads 23J at specific positions of the centre plate 24J of the interface 21. The specific positons at which the contact pads 23J of the centre plate 24J of the interface 21 is positioned correspond to the where the contact pads at the rear side of the second payment terminal 2J is positioned, when the second cover 1J with the second payment terminal placed therein, is in place in the holder 50, after the second cover 1J has been fully displaced into the holder 50.

Apart from the interface 21, the holder shown in Fig. 7I is the same as the holder shown in Fig. 7J. The one and same holder is thus capable of holding at least two different covers 1I, 1J for two different payment terminals 21, 2J by only inserting or exchanging one interface or the another interface, each interface being specifically selected depending on the payment terminal to be placed in the cover. However, the inner contour 12 (see Fig. 1B) of the aperture 11 (see Fig. 1B) is the same for both the first cover 1I and the second cover 1J.

Thereby, the outer contour 22 of the interface 21 may be the same for different covers. Only the centre plate 24 with holes 42 (see Fig. 6A-6D) for the contact pads 23 of the contact pad plate (also see Fig. 6A-6D) and the contact pad plate 41A,41B (See Fig. 6A-6D) itself, that need being selected or exchanged depending on the payment terminal 2I or 2J to be placed in the one and same holder 50. In an alternative embodiment of the interface 21, the centre plate 24 may be void of holes for contact pads.

Payment terminals exist, which do not have any contact pads at the rear side of the payment terminal. If such a payment terminal is to be placed in the holder, or if such a payment terminal is to be placed in a cover, and the cover for such payment terminal is to be placed in the holder, a centre plate with no holes may be inserted as part of the interface, simply for closing off access to the interior of the interface.

The holder shown in Fig. 7I And Fig. 7J also has a finger-release lock 50 as described with reference to Fig. 1A-3D. The description of the finger-release lock 50 shown and described with reference to Fig. 1A-3D is incorporated by reference into the present description of Fig. 7I and Fig. 7J.

All of the figures, Fig. 7A-7J, have a key lock 52 (see fig. 7I and Fig. 7J) being part of a locking structure. The key lock functions by a key bushing 53 with a key slot (not shown) wherein a specific key may be inserted for locking and unlocking the holder 50 to the table stand 10. The key busing 53 is part of the table stand 51, not part of the holder 50. However, each holder 50 has a male part of the locking structure identical to the female part of the locking structure as shown and described with reference to Fig. 1A-3D. And each of the covers 1 shown in Fig. 7A-7J has a male part of the locking structure similar to the male part shown and described with reference to Fig 1A-3D. The description of the male part 13 and the female part 25 shown and described with reference to Fig. 1A-3D is incorporated by reference into the present description of Fig. 7A-Fig. 7J. Using the key lock 52, after the cover 1 has been fully placed in the holder 50, results in the cover 1 not capable of being released from the holder 50. The key lock 52 functions as anti-theft means for the cover 1, and thus, the key lock 52 functions as anti-theft means for the payment terminal 2, when placed in the cover 1.

In Fig. 7A-7J, the joining structure is a groove and tongue joining structure, with the grove provided along opposite sides of the cover, or of the payment terminal itself, and with the tongues provided along opposite side edges of the holder.

Other types of joining structures may be used for holding the cover or the payment terminal itself to the holder. As example, the joining structure may be one part of a magnetic joining structure being a part of the holder and another part of a magnetic joining structure being part of the cover or the payment terminal itself. Thus, either the holder or the cover or the payment terminal itself may be provided with a magnet with a selected polarity, and either the cover or the payment terminal itself or the holder, respectively, may be provided with a piece of magnetic metal or with a magnet with a polarity opposite to the selected polarity, and which piece of metal, or which magnet with opposite polarity, the magnet with a selected polarity of the holder or the cover or the payment terminal itself may interact with, thereby holding the cover or the payment terminal itself to the holder.

Another example, the joining structure may be one part of a click-on joining structure being part of the holder, and another part of a click-on joining structure being part of the cover or the payment terminal itself. Thus, either the holder or the cover or the payment terminal itself may be provided with a male part of a click-on joining structure, and either the cover or the payment terminal itself or the holder, may be provided with a female part of a click-on joining structure, so that the male part of the click-on joining structure may interact with the female part of the click-on joining structure, thereby holding the cover or the payment terminal itself to the holder.

Yet another example, the joining structure may be one part of a Velcro® tape being attached to the holder, and another part of a Velcro® tape being attached to the cover or to the payment terminal itself. Thus, either the holder or the cover or the payment terminal itself may be provided with a male part of a Velcro® tape, and either the cover or the payment terminal itself or the holder, may be provided with a female part of a Velcro® tape, so that the male part of the Velcro® tape may interact with the female part of the Velcro® tape, thereby holding the cover or the payment terminal itself to the holder.

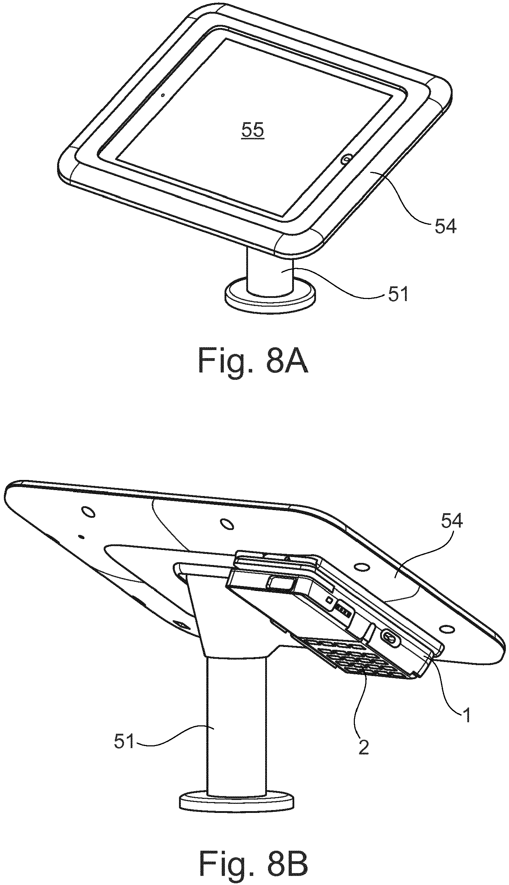

Fig. 8A and Fig. 8B show a holder 54 for holding a tablet 55 and for holding a cover 1 according to the invention at a rear side of the tablet holder 54. In the embodiment shown, the tablet holder 54 is supported by a table stand. However, in other uses of the tablet holder 54, the tablet holder may be carried by hand by a user. The tablet holder 54 for also holding the cover 1 with a payment terminal 2 placed therein are intended for holding, individually and separately, at least two different payment terminals, either different terminals in relation to size and shape and/or different payment terminal in relation to position of electrical pads for interface with equipment external to the payment terminal. By use of a cover 1 according to the invention, and by providing the rear side of the tablet holder 54 with tongues capable of interacting with the grooves of the cover or of the payment terminal itself, the tablet holder 54 is non-dependent on the payment terminal being placed to the holder as long as a distance between tongues provided along opposite linear lines of the holder have a mutual distance similar to a distance between the grooves along parallel opposite linear lines along side edges of the cover.

## Claims

1. One cover for a selected one payment terminal, said one cover having a cavity for holding the one payment terminal and the cavity of said one cover having a shape and size congruent with an outer surface of the selected one payment terminal, and
- another cover for a selected other payment terminal, said other cover having a cavity for holding the other payment terminal and the cavity of said other cover having a shape and size congruent with an outer surface of the selected other payment terminal,
- a size and shape of the cavity of the one cover being different than a size and a shape of the cavity of the other cover, and
- a size and shape of the outer surface of the selected one payment terminal being different than a size and shape of the outer surface of the selected other payment terminal,
- both said one cover and said other cover having first part of a joining structure, said first part of the joining structure of both the one cover and the other cover intended for and capable of interacting with corresponding second part of the joining structure, - said first part of the joining structure of the one cover being identical to said first part of a joining structure of the other cover, and vice versa,
- said second part of the joining structure constituting part of a holder intended for and capable of holding, individually and separately, both the one cover and the other cover by interaction between the first part and the second part of the joining structure.

2. One cover and another cover according to claim 1,
- said first part of the joining structure of the one cover extending along parallel linear lines at opposite sides of the one cover, and
- said first part of the joining structure of the other cover extending along parallel linear lines at opposite sides of the other cover,
- said second part of the joining structure of the holder intended for and capable of holding the one cover and the other cover extending along parallel linear lines at opposite sides of the holder,
- a distance between the parallel linear lines at opposite sides of said one cover being identical to a distance between said parallel linear lines at opposite sides of a second cover, and
- said distance between the parallel linear lines at opposite sides of said one cover and the other corresponding a distance between said parallel linear lines at opposite sides of the holder.

3. One cover and another cover according to claim 1 or 2, where the first part of the joining structure is one of the following structures: grooves extending along parallel linear lines at opposite sides of both the one cover and the other, or tongues extending along parallel linear lines at opposite sides of both the one cover and the other cover.

4. One cover and another cover according to any of the preceding claims,
- said one cover and said other cover having a bottom and a top, said bottom and top of the one cover and the other cover being positioned where a bottom part and a top part, respectively, of a payment terminal is positioned, when the payment terminal is placed in the one cover or in the other cover, and
- said one cover and said other cover having a first part of a male/female locking structure, and where a corresponding second part of the male/female locking structure constitute part of the holder, which the first cover and the other cover are intended for and capable of being placed in, and
- said first part of the male/female locking structure of both the one cover and the other cover having the same size and shape, and
- and where a key of the locking structure is provided, said key passing through the holder and said key engaging with either the one cover or the other cover, when either the one cover or the other cover is placed in the holder, and
- said key capable of locking the male/female locking structure of either the one cover or the other cover to the female/male locking structure of the holder, when either the first cover or the other cover is placed in the holder.

5. One cover and another cover according to any of the preceding claims,
- both said one cover and said other cover having an aperture with an inner contour, said inner contour of both the one cover and the other cover intended for and capable of aligning with a corresponding outer contour of an interface of a holder, when the one cover or the other cover is placed in the holder,
- said aperture and inner contour of the one cover being identical to said aperture and inner contour of the other cover, and vice versa, so that, when the cover is placed in the holder, the inner perimeter of the aperture of the one cover or the other cover aligns with the outer perimeter of the interface of the holder,
- said outer contour of an interface constituting part of a holder intended for and capable of holding, individually and separately, both the one cover and the other cover by interaction between the first part and the second part of the joining structure.

6. A holder for holding one cover and another cover according to any of claims 1-5, said holder having second part of a joining structure, and said holder intended for and capable of holding, individually and separately, both the one cover and the other cover by interaction between a first part of the joining structure constituting part of the one cover and the other cover and the second part of the joining structure.

7. A holder according to claim 6,
- said second part of the joining structure of the holder extending along parallel linear lines at opposite sides of the holder, and
- a distance between the parallel linear lines of the second part of the joining structure at opposite sides of the holder corresponding to a distance between the parallel linear lines at opposite sides of said one cover and the other cover.

8. A holder according to claim 6 or 7, where the second part of the joining structure is one of the following structures: grooves extending along parallel linear lines at opposite sides of the holder, said groves intended for and capable of interacting with corresponding tongues extending along opposite sides of a first cover and another cover, or tongues extending along parallel linear lines at opposite sides of holder, said tongues intended for and capable of interacting with corresponding grroves extending along opposite sides of a first cover and the other cover.

9. A holder according to any of the preceding claims, said holder being a support unit for supporting, individually and separately, the one cover or the other cover for a selected one payment terminal or a selected other payment terminal, and according to any of claims 1-5, and said support unit also capable of supporting at least one mobile device not being a payment terminal such as a smart device, e.g., a mobile phone,
- the support unit comprising at least two support surfaces for supporting the at least two mobile device along the support surfaces of the support unit, and where one of the at least two mobile devices is a payment terminal,
- at least one of the support surfaces comprising retaining elements of a type, a shape and a size congruent with a type, a shape and a size of the at least one mobile device, said retaining elements capable of retaining at least one mobile device to the at least one support surface, and
- the support unit having at least a first electric interface and a second electric interface for a corresponding first electric interface and second electric interface, respectively, of different first and second mobile devices, and
- the support unit having at least one electric socket of a type, a shape and a size congruent with a type, a shape and a size of a plug of a charging device being external to the support unit and capable of being electrically connected to the support unit, and
- and the support unit having a first wired connection between the at least one electric socket and the first electric interface and having a second wired connection between the at least one electric socket and the second electric interface.

10. A holder according to any of the preceding claims, where the holder is a support unit for supporting a tablet, said support unit having an electrical interface for the a mobile device being a payment terminal, said electrical interface configured as a contact surface provided with a plurality of electrical pads extending substantially along the contact surface, the electrical pads of the contact surface being provided at locations along the plane contact surface corresponding to correlating contact pads of the payment terminal, and where the contact surface is detachable and is replaceable by another contact surface, whereby various payment terminals may be supported by the support unit and may be connected with the electrical pads of the contact surface.

11. A holder according to any of the preceding claims,
- said holder having an interface with an outer contour intended for and capable of aligning with a corresponding inner contour of an aperture of the one cover and the other cover, when the one cover or the other cover is placed in the holder, so that, when the cover is placed in the holder, the inner perimeter of the aperture of the one cover or the other cover aligns with the outer perimeter of the interface of the holder,
- said holder with the outer contour of the interface intended for and capable of holding, individually and separately, both the one cover and the other cover by interaction between the first part and the second part of the joining structure.

12. Method for initially supporting a selected one payment terminal in one holder according to any of claims 5-11 and subsequently supporting a selected other payment terminal in the one and same holder according to any of claims 5-11,
said method comprising the initial non-prioritised two steps of:
- placing the selected one payment terminal in one cover according to any of claims 1-5, and placing the one cover in one holder, and
said method furthermore comprising the subsequent step of releasing the one cover from the one holder, and
said method comprising the further subsequent non-prioritised two steps of:
- placing the selected other payment terminal in another cover according to any of claim 1-5, and placing the other cover in the one holder.

13. Method for initially supporting a selected one payment terminal in one holder and subsequently supporting the same selected one payment terminal in another holder, said method comprising the initial non-prioritised steps of:
- placing the selected one payment terminal in one cover according to any of claim 1-5, and placing the one cover according to any of claims 1-5 in one holder according to any of claims 5-11, and
- said one holder having tongues extending along parallel linear lines at opposite sides of the one holder, said tongues intended for interacting with corresponding grooves extending along opposite sides of the one cover,
the method furthermore comprising the subsequent step of
- releasing the one cover from the one holder, and placing the one cover in the other holder, said other holder being different to the one holder, and
- said other holder having tongues extending along parallel linear lines at opposite sides of the other holder, said tongues intended for interacting with corresponding grooves extending along opposite sides of the one cover, and
- a distance between the parallel linear lines at opposite sides of both said one holder and said other holder corresponding to a distance between the grooves extending along parallel linear lines at opposite sides of the one cover.

14. Use of either one of said one cover and said other cover according to any of claims 1-5 for supporting either a selected one payment terminal or a selected other payment terminal, respectively, and either said one cover or said other cover initially used in a holder according to any of claims 6-11, and the other one of said one cover and other cover subsequently used in the one and same holder according to any of claims 6-11.
